# EUROPEAN PATENT APPLICATION

(11) **EP 4 474 140 A1**
(43) Date of publication of application: **11.12.2024**
(21) Application number: 23178423.2
(22) Date of filing: 09.06.2023
(51) Int. Cl.: B32B 3/02, B32B 3/06, B32B 3/08, B32B 7/12

(54) **STRUCTURAL COMPONENT, METHOD FOR MANUFACTURING A STRUCTURAL COMPONENT AND AIRCRAFT**

(71) Applicant: Airbus Operations GmbH, 21129 Hamburg (DE)
(72) Inventor: BEUMLER, Thomas, 21129 Hamburg (DE); REYE, Volker, 21129 Hamburg (DE)

(57) **Abstract**

The present invention provides a structural component (1), in particular for an aircraft or spacecraft fuselage, comprising: a laminate (2) having metal layers (3) and an adhesive layer (4) placed between and bonded to the metal layers (3); and an edge profile (5) made of a weldable material, which is materially bonded to the laminate (2), wherein the edge profile (5) extends at least in sections along an edge (6) of the laminate (2). Further the present invention provides a method (M) for manufacturing such a structural component (1), and an aircraft (10) or spacecraft comprising such a structural component (1).

## Description

The invention relates to a structural component. In particular, the invention relates to a structural component for an aircraft or spacecraft fuselage. Further, the invention relates to a method for manufacturing a structural component. The invention is furthermore concerned with an aircraft or spacecraft containing a fuselage with such a structural component.

Moldings made of a laminate of at least one metal sheet and at least one fiber-reinforced polymer layer connected thereto (hereinafter referred to as a fiber metal laminate) are increasingly used in industries such as the transportation industry, for example in cars, trains, aircraft and spacecraft. Such laminates can for example be used in the wings, fuselage and tail panels and/or other skin panels for aircraft, and generally ensure an improved fatigue resistance of the aircraft component.

Such laminates are typically manufactured in an autoclave for curing, the autoclave having a limited space. Thus, there is a need to assemble and attach the laminates to one another or a supporting structure for forming parts of the wings or fuselage, for example.

For example document EP 0 983 141 A1 describes a method for making a laminate or laminated panel. Furthermore, document US 5 567 535 A describes an integral splice concept for fastening a plurality of two or more finished laminated sheets together.

Aspects of the invention may provide solutions for a quick and easy to manufacture bonding concept of laminates.

According to the invention, this problem is solved in each case by the subject matters of the independent claims.

According to a first aspect of the invention, a structural component is provided. The structural component comprises a laminate having metal layers and an adhesive layer placed between and bonded to the metal layers. Further, the structural component comprises an edge profile made of a weldable material, which is materially bonded to the laminate, wherein the edge profile extends at least in sections along an edge of the laminate. In particular, a structural component for an aircraft or spacecraft fuselage is provided.

According to a second aspect of the invention, a method for manufacturing a structural component is provided. The method comprises a method step of forming or placing an edge profile made of a weldable material on a form tool. Moreover, the method comprises a method step of placing metal layers and an adhesive layer as a sandwich in the order metal layer, adhesive layer and metal layer on the form tool such that the edge profile overlaps and extends at least in sections along an edge of the thus obtained laminate. Further, the method comprises a method step of applying heat and/or pressure to the laminate and the edge profile. In particular, a method for manufacturing a structural component for an aircraft or spacecraft fuselage is provided.

According to a third aspect of the invention, an aircraft or spacecraft comprising a fuselage is provided. The fuselage comprises a structural component according to the invention. Alternatively or additionally, the fuselage comprises a structural component manufactured according to the invention.

A fundamental concept of the invention is to providing the edge profile, which surrounds the laminate at least in sections. The invention considers a structural component or skin panel, respectively, with a bonded transition of a laminate sheet edge into the edge profile, which can be welded. Specifically, a laminate structure is provided which comprises at least two metal layers and one adhesive layer, though as many as desired of each layer may be used, as long as the total number of metal layers exceeds the total number of adhesive layers by one.

A particular advantage in the solution according to an aspect of the invention is that welded joints can be manufactured faster compared with riveted or bolted joints. That means a fuselage or a fuselage structure, respectively, comprising a structural component according to the invention can be assembled more quickly. The edge profile can be welded because it does not contain an epoxy content like the laminate does. Furthermore, the riveted laminate joint might need a crack stopper which can be omitted by welding the edge profiles. The crack stopper is provided in an overlapping zone of riveted laminate joints and made of titanium. Hence, by omitting such a crack stopper the present invention saves an expensive material like titanium and effort for integrating the crack stopper into the laminate joint. The structural component according to the invention can provide the lightest bonded metal design with the highest possible inspection intervals for aircraft applications.

Advantageous embodiments and further developments emerge from the description with reference to the figures.

According to some embodiments of the structural component according to the invention, the edge profile is sectional in contact with the adhesive layer. Thus, an additional adhesive can be omitted. Furthermore, less difficulties may occur in manufacturing when applying the correct adhesive to the correct part since only one type of adhesive is to be applied.

According to some further embodiments of the structural component according to the invention, the edge profile has a single-curved or double-curved shape. Alternatively or additionally, the edge profile can be planar or have a multi-curved shape. Optionally, the shape of the edge profile may be a combination of the mentioned shapes.

According to some further embodiments of the structural component according to the invention, the adhesive layer comprises a composite material. For example, the composite material can be selected from the group of carbon fiber composite, glass fiber composite, reinforced polymers, and other composite produced from two or more constituent materials.

The adhesive layer is, preferably, reinforced with (glass) fibers. The fibers may be oriented individually or in groups, in one direction or in several different directions, depending on the loading conditions of the structural component. The adhesive layer preferably comprises synthetic polymers. Examples of suitable non-thermoplastic polymers are epoxy resins, unsaturated polyesters, vinyl esters, phenolic resins. Suitable thermoplastic polymers are, e.g., polyarylates (PAR), polysulphones (PSO), polyether sulphones (PES), polyether imides (PEI), or polyphenylene ethers (PEE), polyphenylene sulphide (PPS), polyamide-4,6, polyketone sulphide (PKS), polyether ketones (PEK), polyether ether ketone (PEEK), and polyether ketone-ketone (PEKK). Moreover, in addition to the adhesive that is part of the adhesive layer, adhesives can be used locally in other parts of the laminate or of the structural component. In principle, all adhesives suitable for use in the adhesive layer are also suitable for use as 'local' adhesive. The adhesive layer can have a thickness similar to that of the metal layers. Preferred fibers for reinforcing the adhesive layers are continuous fibers or filaments of a material such as glass, aromatic polyamides ("aramids"), and carbon. The preferrred glass fibers are S-2 glass or R-glass fibers. Also suitable are less expensive E-glass fibers. One suitable aramid fiber is made from poly-para-phenylene terephthalamide. The fibers may have a modulus of elasticity of about 60-650 GPa and an elongation at break of about 0.2-8%.

According to some further embodiments of the structural component according to the invention, the composite material comprises a uni-directional glass fiber reinforced prepreg. Prepregs, short for preimpregnated fibers, are semi-finished textile fibers that are pre-impregnated with special reactive resins.

According to some further embodiments of the structural component according to the invention, the weldable material comprises monolithic aluminum, aluminum alloy or the like light metals. Due to its lower density and better specific strength compared to other common metals, aluminum is often used where the mass of a means of transport has to be moved and contributes to fuel consumption, in particular in the aircraft and aerospace industry.

According to some further embodiments of the structural component according to the invention, the metal layers each have a thickness in the range of about 0.2 mm to about 0.5 mm, in particular a thickness of about 0.4 mm.

According to some further embodiments of the structural component according to the invention, the structural component further comprises a doubler bridging a splice between the laminate and the edge profile, wherein the doubler is attached thereto by means of a curable adhesive. Thus, the splice can be improved in terms of withstanding a shearing stress. Preferably, the doubler can be configured as a metal-polymer laminate. For example, the doubler can be provided as a patch being attached over the splice.

According to some embodiments of the method according to the invention, the edge profile is adjusted by placing the edge profile in a corresponding recess of the form tool, or by the means of an adjustment element. Hence, the edge profile can provide a geometrically improved mechanical interface for welding the edge profile to another part. Therefore, rework at the edge profile for fitting to an assembly partner of the structural component can be reduced.

According to some embodiments of the method according to the invention, the method further comprises a step of attaching a curable adhesive on a splice between the laminate and the edge profile, and a doubler over the curable adhesive for securing the splice.

According to some embodiments of the method according to the invention, the method further comprises a step of pre-treating a section of the edge profile or a section of the metal layers or a section of the adhesive layer for materially bonding. For example, the pre-treating may include removing a clad layer.

Alternatively, a section of the edge profile and a section of the metal layers, or a section of the edge profile and a section of the adhesive layer, or a section of the metal layers and a section of the adhesive layer can be pre-treated for materially bonding. Furthermore, a section of the edge profile and a section of the metal layers and a section of the adhesive layer can be pre-treated for materially bonding.

According to some embodiments of the method according to the invention, the method further comprises a step of pre-treating a section of the edge profile for welding by milling.

Preferably, heat and/or pressure can be applied to the laminate and the edge profile by curing in an autoclave.

According to some embodiments of the aircraft or spacecraft according to the invention, the fuselage comprises at least two structural components, which are welded to one another at contacting edge profiles. In particular, the at least two structural components are welded to one another by friction stir welding.

In other words the present invention can be described as follows. The invention considers the bonded transition of fiber metal laminate sheet edges or the edge of the laminate, respectively, into a monolithic design or the edge profile, respectively, which can be welded. For example, two monolithic aluminum (edge) profiles can be welded along their edge.

The method for manufacturing an aircraft fuselage may basically comprise the following manufacturing sequence:
- Manufacture curved or double curved monolithic aluminum parts or edge profiles, respectively. Pre-treat them for bonding, avoid surface pre-treatment at to be welded edges, and remove any clad layer of the monolithic aluminum parts.
- Lay-up the monolithic edges (or: edge profiles), all required metal layers such as aluminum foils, glass fiber prepregs as an example for the adhesive layer and bond films in a bonding mould or tool form, respectively. Thereby, all parts can be provided with surface pre-treatment for bonding. The bonding mould requires a cut-out or recess for the monolithic aluminum part. Alternatively, hard tooling, e.g. an adjustment element or the like, can be used.
- Lay-up of bond films and stringer, optionally with surface pre-treatment for bonding.
- Bagging the panel or structural component, respectively, and curing in an autoclave. That means, prior to welding, each of the edge profiles was bonded in a staggered design to a fiber metal laminate skin.
- Remove the panel from the autoclave, perform edge milling and edge surface treatments.
- Position two adjacent panels/structural components in an assembly line and weld them.
- Provide local surface treatment at a weld line from inside and outside.
- Drill holes at frame positions as required and install frame clips, frames or frame couplings.

The above embodiments and further developments can be combined with one another arbitrarily, as far as appropriate. Further possible configurations, developments and implementations of the invention are also combinations of features of the invention described above or below for the exemplary embodiments that are not explicitly cited. In particular, a person skilled in the art will also add individual aspects as improvements or additions to the respective basic form of the present invention.

The present invention is explained more specifically below on the basis of the exemplary embodiments indicated in the schematic figures, in which:
- Fig. 1: shows a schematic illustration of a structural component according to an embodiment of the invention in a cut section view;
- Fig. 2: shows a schematic illustration of a structural component for an aircraft or spacecraft fuselage according to a further embodiment of the invention;
- Fig. 3: shows a schematic illustration of two adjacent structural components being welded at the edge profiles according to a further embodiment of the invention;
- Fig. 4: shows a schematic illustration of an aircraft comprising a structural component according to a further embodiment of the invention;
- Fig. 5: shows a flow chart for a method for manufacturing a structural component according to a further embodiment of the invention.

The accompanying figures are intended to convey a further understanding of the embodiments of the invention. They illustrate embodiments and are used in conjunction with the description to explain principles and concepts of the invention. Other embodiments and many of the cited advantages emerge in light of the drawings. The elements of the drawings are not necessarily shown to scale in relation to one another. Direction-indicating terminology such as for example "at the top", "at the bottom", "on the left", "on the right", "above", "below", "horizontally", "vertically", "at the front", "at the rear" and similar statements are merely used for explanatory purposes and do not serve to restrict the generality to specific configurations as shown in the figures.

In the figures of the drawing, elements, features and components that are the same, have the same function and have the same effect are each provided with the same reference signs - unless explained otherwise.

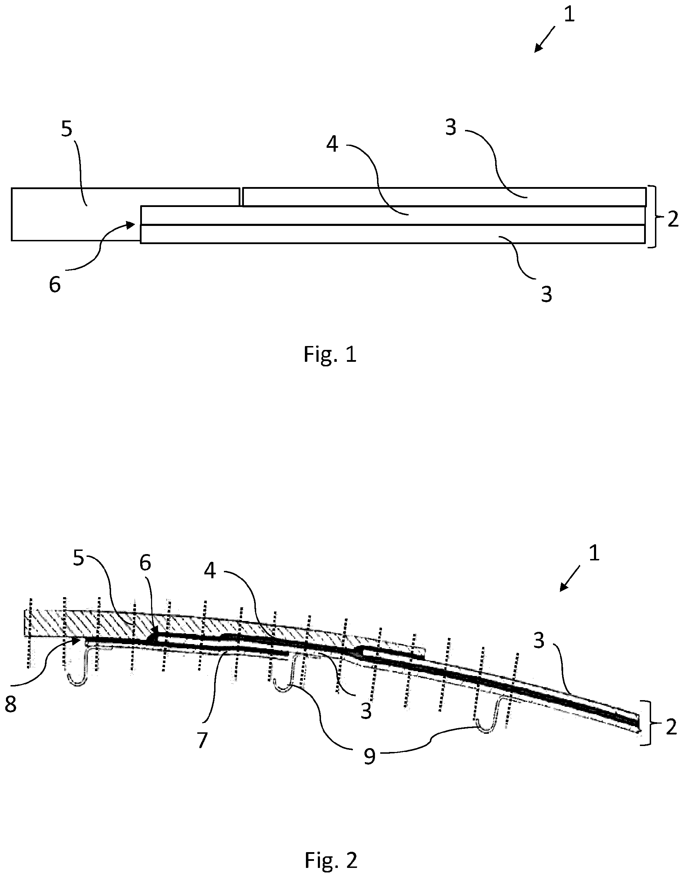

Fig. 1 shows a schematic illustration of a structural component 1. The structural component 1 comprises a laminate 2 having two metal layers 3 and an adhesive layer 4, and an edge profile 5.

Exemplarily, the two metal layers 3 each have a thickness in the range of about 0.2 mm to about 0.5 mm. The adhesive layer 4 can have a thickness in the same range as the metal layers 3.

Furthermore, the adhesive layer 4 comprises a composite material, for instance. The adhesive layer 4 is placed between the two metal layers 3 and bonded to the metal layers 3 like a sandwich. That means the laminate 2 can be configured as a sandwich structure with outer metal layers 3 and an inner adhesive layer 4, for example.

The edge profile 5 is made of a weldable material. Furthermore, the edge profile 5 is materially bonded to the laminate 2, wherein the edge profile 5 extends at least in sections along an edge 6 of the laminate 2. In some embodiments, the edge profile 5 can extend along the whole edge 6 of the laminate 2 such that the edge profile may be configured as a frame for the laminate 2.

Optionally, the edge profile 5 is sectional in contact with the adhesive layer 4 as it is illustrated in Fig. 1. Therefore, one of the two metal layers 3 exemplarily ends before the edge 6 of the laminate 2 such that the layers of the laminate 2 form a step. Thus, the edge profile 5 can have a larger contact area to the adhesive layer 4, wherein the bonding strength between the edge profile 5 and the laminate 2 can be increased.

Fig. 2 shows a schematic illustration of a structural component 1 for an aircraft fuselage or a spacecraft fuselage. More specifically, an edge section of the structural component 1 in a cut view is shown. The structural component 1 comprises a laminate 2 having metal layers 3 and an adhesive layer 4, and an edge profile 5.

In this example, the laminate 2 is configured as a fiber metal laminate (FML). The FML 2 contains two aluminum layers 3 each having a thickness of 0.4 mm. Additionally, the FML 2 contains the adhesive layer 4 with three layers of uni-directional glass fiber prepregs.

The adhesive layer 4 is placed between the two metal layers 3 and bonded to the metal layers 3 like a sandwich. That means the laminate 2 can be configured as a sandwich structure with outer metal layers 3 and the inner adhesive layer 4 containing the three layers of uni-directional glass fiber prepregs, for example.

The edge profile 5 is made of a weldable material, which comprises monolithic aluminum. Furthermore, the edge profile 5 is materially bonded to the FML 2, wherein the edge profile 5 extends at least in sections along an edge 6 of the FML 2. In particular, the edge profile 5 is adhered to the FML 2 by a curable adhesive and/or a resin of the adhesive layer 4. Exemplarily, the edge profile 5 has a single-curved shape. The radius of single-curved body panels for use in a fuselage preferably lies within a range from 1 m to 7 m.

As it is illustrated in Fig. 2, the edge profile 5 and the adhesive layer 4 form a staggered contact area. Thereby, the structural component 1 further comprises a doubler 7 bridging a splice between the FML 2 and the edge profile 5. The doubler 7 is attached to the FML 2 and the edge profile 5 by means of a curable adhesive 8.

Optionally, the structural component 1 may further comprise a stringer 9 mounted to the metal layers 3. In particular, the stringer 9 is mounted to an inner metal layer of the metal layers 3. For example, the stringer 9 can be mounted by means of a rivet, a screw or similar fastening element. The dotted lines indicate an exemplary rivet pitch of rivets for the structural component 1 in hoop direction. Alternatively or additionally, the rivets can be used for attaching frame clips to the structural component 1, for example.

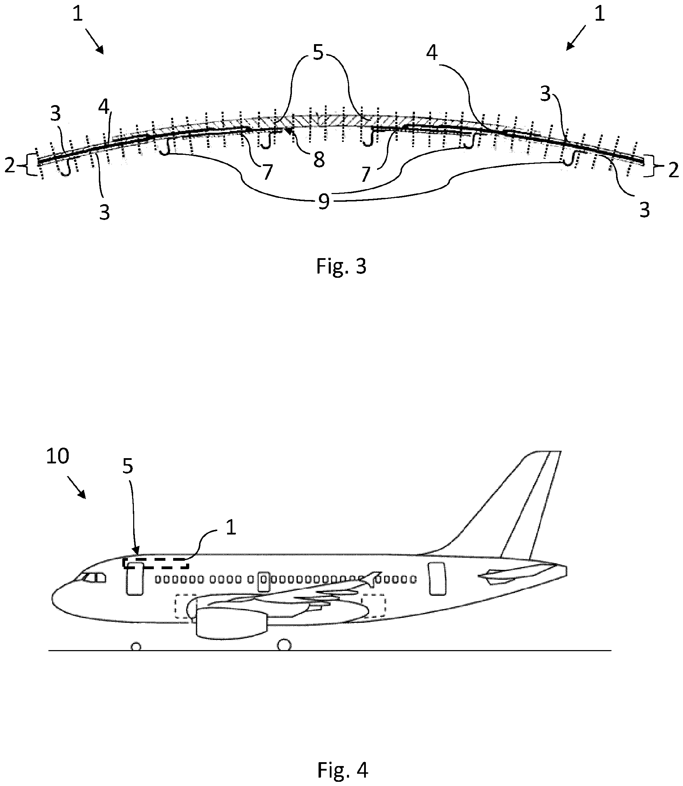

Fig. 3 shows a schematic illustration of two adjacent structural components 1 being welded at the edge profiles 5.

The two adjacent structural components 1 substantially correspond to the structural components according to Fig. 1 or 2, wherein the two adjacent structural components 1 both have a geometrically corresponding edge profile 5 such that the edge profiles 5 can be bonded, in particular by friction stir welding. Preferably, the geometrically corresponding edge profiles 5 contact one another at their front sides. But, it is not limited to that and the geometrically corresponding edge profiles 5 can also contact one another at an inside and outside, respectively, when the geometrically corresponding edge profiles 5 are overlapped.

Fig. 4 shows a schematic illustration of an aircraft 10 comprising a structural component 1. More specifically, the aircraft 10 comprises a fuselage having the structural component 1.

Preferably, the fuselage of the aircraft 10 comprises at least two structural components 1, which are welded to one another at contacting edge profiles 5, like it is illustrated in Fig. 3.

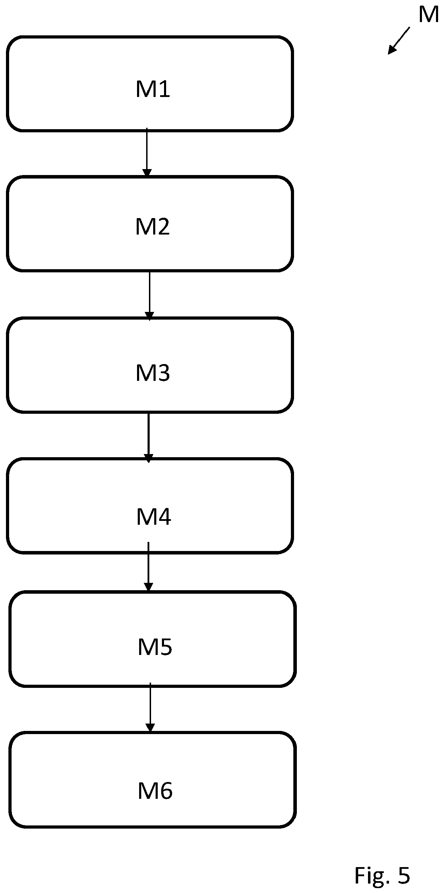

Fig. 5 shows a flow chart for a method M for manufacturing a structural component 1.

The method M comprises a step of forming or placing M1 an edge profile 5 made of a weldable material on a form tool. The form tool or substrate on which the metal layers 3 and the adhesive layer 4 are stacked can be flat or curved. The form tool can, for instance, be shaped as the negative of a single-curved or double-curved skin panel for an aircraft 10, spacecraft or indeed any other desired form. That way, the skin panel or other desired form is manufactured in one go instead first making a flat laminate by stacking and curing and subsequently shaping the laminate into such a form.

Furthermore, the edge profile 5 can be adjusted by placing the edge profile 5 in a corresponding recess of the form tool.

The method M further comprises a step of pre-treating M2 a section of the edge profile 5 and a section of the metal layers 3 for materially bonding, in particular for materially bonding those to the adhesive layer 4. Thereby, the pre-treating M2 includes removing a clad layer.

The method M further comprises a step of placing M3 two metal layers 3 and an adhesive layer 4 with three layers of uni-directional glass fiber prepregs as a sandwich, wherein the sandwich is structured in the order metal layer 3, adhesive layer 4 and metal layer 3 on the form tool such that the edge profile 5 overlaps and extends at least in sections along an edge 6 of the thus obtained laminate 2. The thus obtained laminate 2, preferably, is configured as a FML. For example, the two metal layers 3 and the three layers of uni-directional glass fiber prepregs are positioned in a staggered way.

The method M further comprises a step of attaching M4 a curable adhesive 8 on a splice between the laminate 2 and the edge profile 5. Furthermore, a doubler 7 is attached M4 over the curable adhesive 8 for securing the splice.

The method M further comprises a step of applying M5 heat and/or pressure to the laminate 2 and the edge profile 5 by curing the structural component 1 in an autoclave. In particular, the step M5 is performed after the steps M1, M3 and M4.

The method M further comprises a step of pre-treating M6 a section of the edge profile 5 for welding by milling. Method step M6 is an optional step and performed, for example, when the edge profiles 5 of two adjacent structural components 1 are not geometrically corresponding such that welding cannot be performed. That means, a gap between the edge profiles 5 is too large, for instance. Therefore, the step pre-treating M6 is useful to make the edge profiles 5 geometrically corresponding for welding.

In the detailed description above, various features have been combined in one or more examples in order to improve the rigorousness of the illustration. However, it should be clear in this case that the above description is of merely illustrative but in no way restrictive nature. It serves to cover all alternatives, modifications and equivalents of the various features and exemplary embodiments. Many other examples will be immediately and directly clear to a person skilled in the art on the basis of his knowledge in the art in consideration of the above description.

The exemplary embodiments have been chosen and described in order to be able to present the principles underlying the invention and their application possibilities in practice in the best possible way. As a result, those skilled in the art can optimally modify and utilize the invention and its various exemplary embodiments with regard to the intended purpose of use. In the claims and the description, the terms "including" and "having" are used as neutral linguistic concepts for the corresponding terms "comprising". Furthermore, use of the terms "a", "an" and "one" shall not in principle exclude the plurality of features and components described in this way.

While at least one exemplary embodiment of the present invention(s) is disclosed herein, it should be understood that modifications, substitutions and alternatives may be apparent to one of ordinary skill in the art and can be made without departing from the scope of this disclosure. This disclosure is intended to cover any adaptations or variations of the exemplary embodiment(s). In addition, in this disclosure, the terms "comprise" or "comprising" do not exclude other elements or steps, the terms "a" or "one" do not exclude a plural number, and the term "or" means either or both. Furthermore, characteristics or steps which have been described may also be used in combination with other characteristics or steps and in any order unless the disclosure or context suggests otherwise. This disclosure hereby incorporates by reference the complete disclosure of any patent or application from which it claims benefit or priority.

### Reference list

- 1: structural component
- 2: laminate
- 3: metal layer
- 4: adhesive layer
- 5: edge profile
- 6: edge
- 7: doubler
- 8: curable adhesive
- 9: stringer
- 10: aircraft

- M: method
- M1: forming or placing
- M2: pre-treating
- M3: placing
- M4: attaching
- M5: applying
- M6: pre-treating

## Claims

1. Structural component (1), in particular for an aircraft or spacecraft fuselage, comprising:
a laminate (2) having metal layers (3) and an adhesive layer (4) placed between and bonded to the metal layers (3); and
an edge profile (5) made of a weldable material, which is materially bonded to the laminate (2), wherein the edge profile (5) extends at least in sections along an edge (6) of the laminate (2).

2. Structural component (1) according to claim 1, wherein the edge profile (5) is sectional in contact with the adhesive layer (4).

3. Structural component (1) according to claim 1 or 2, wherein the edge profile (5) has a single-curved or double-curved shape.

4. Structural component (1) according to one of the preceding claims, wherein the adhesive layer (4) comprises a composite material.

5. Structural component (1) according to claim 4, wherein the composite material comprises a uni-directional glass fiber reinforced prepreg.

6. Structural component (1) according to one of the preceding claims, wherein the weldable material comprises monolithic aluminum or aluminum alloy.

7. Structural component (1) according to one of the preceding claims, wherein the metal layers (3) each have a thickness in the range of about 0.2 mm to about 0.5 mm, in particular a thickness of about 0.4 mm.

8. Structural component (1) according to one of the preceding claims, further comprising a doubler (7) bridging a splice between the laminate (2) and the edge profile (5), wherein the doubler (7) is attached thereto by means of a curable adhesive (8).

9. Method (M) for manufacturing a structural component (1), in particular for an aircraft or spacecraft fuselage, comprising the method steps of:
- forming or placing (M1) an edge profile (5) made of a weldable material on a form tool;
- placing (M3) metal layers (3) and an adhesive layer (4) as a sandwich in the order metal layer (3), adhesive layer (4) and metal layer (3) on the form tool such that the edge profile (5) overlaps and extends at least in sections along an edge (6) of the thus obtained laminate (2); and
- applying (M5) heat and/or pressure to the laminate (2) and the edge profile (5).

10. Method (M) according to claim 9, wherein the edge profile (5) is adjusted by placing the edge profile (5) in a corresponding recess of the form tool, or by the means of an adjustment element.

11. Method (M) according to claim 9 or 10, further comprising a step of attaching (M4) a curable adhesive (8) on a splice between the laminate (2) and the edge profile (5), and a doubler (7) over the curable adhesive (8) for securing the splice.

12. Method (M) according to one of the claims 9 to 11, further comprising a step of pre-treating (M2) a section of the edge profile (5), a section of the metal layers (3) and/or a section of the adhesive layer (4) for materially bonding.

13. Method (M) according to one of the claims 9 to 12, further comprising a step of pre-treating (M6) a section of the edge profile (5) for welding by milling.

14. Aircraft (10) or spacecraft comprising a fuselage (structure) having a structural component (1) according to one of the claims 1 to 8 and/or a structural component (1) manufactured according to one of the claims 9 to 13.

15. Aircraft (10) or spacecraft according to claim 14, wherein the fuselage comprises at least two structural components (1), which are welded to one another at contacting edge profiles (5).
